# EUROPEAN PATENT APPLICATION

(11) **EP 2 882 269 A1**
(43) Date of publication of application: **10.06.2015**
(21) Application number: 13825809.0
(22) Date of filing: 31.07.2013
(51) Int. Cl.: H05K 7/18, H05K 7/20, G02B 6/42

(54) **OPTICAL MODULE METAL GUIDE RAIL**

(30) Priority: 31.07.2012 CN 201220374825 U
(71) Applicant: ZTE Corporation, Shenzhen, Guangdong 518057 (CN)
(72) Inventor: WU, Jun, Shenzhen Guangdong 518057 (CN); CHEN, Guoqiang, Shenzhen Guangdong 518057 (CN)
(74) Representative: Mozzi, Matteo
(86) International application number: PCT/CN2013/080488
(87) International publication number: WO 2014/019508

(57) **Abstract**

Provided is a metal guide rail for an optical module. The metal guide rail for an optical module includes: an elastic structural part (1), arranged on an inner wall of a heat absorption surface (2) of a shell to contact with an optical module for heat conduction. According to the metal guide rail for the optical module structure, the problem of heat dissipation bottleneck caused by the fact that an air gap exists between the metal guide rail and the optical module and the heat of the optical module is difficult to smoothly conduct to the metal guide rail is solved, conduction heat resistance between a guide rail shell and the optical module is further lowered, a heat dissipation capability of the metal guide rail is improved, and a better heat dissipation condition is created for the optical module.

## Description

### Technical Field

The present invention relates to the field of communication, in particular to a metal guide rail for an optical module.

### Background

An optical module, as a main functional part in communication equipment, is widely applied.

In equipment using a cooling manner of natural heat dissipation such as a Radio Remote Unit (RRU), along with the increase of heat generated by the optical module, the manner of heat dissipation only by virtue of the optical module itself cannot meet its heat dissipation requirement any more, and a heat dissipation capability of the optical module needs to be strengthened. The most common enhanced heat dissipation scheme is to arrange a heat-conducting gasket below a metal guide rail for the optical module and enable the heat-conducting gasket to contact with a housing of the equipment to form a heat conduction path to realize heat dissipation through the housing of the equipment. A standard optical module and a standard metal guide rail, which are commonly used, follow a Small Form-factor Pluggable (SFP) Transceiver Multi-Source Agreement (MSA).

When being applied, such a heat dissipation scheme has the problems as follows.
(1) An air gap exists between the metal guide rail and the optical module, so that heat resistance at the air gap is higher, and the heat of the optical module is difficult to smoothly conduct to the metal guide rail, which causes a heat dissipation bottleneck.
(2) The standard metal guide rail for the optical module is structurally provided with a plurality of ventilation holes with diameters of 2mm. In a pressing assembly process of the heat-conducting gasket and the guide rail, a part of the heat-conducting gasket is inevitably pressed into these small holes. When the optical module is plugged or unplugged, the shearing caused by the plugging or unplugging of the optical module may carry some heat-conducting gasket particles out to cause pollution to the surface of the optical module.
(3) A maximum value of a height of the assembled metal guide rail is only defined not to exceed 9.8mm in the MSA. Actually, heights of guide rails designed by different guide rail manufacturers are not completely the same, which brings inconvenience to the development of a product.

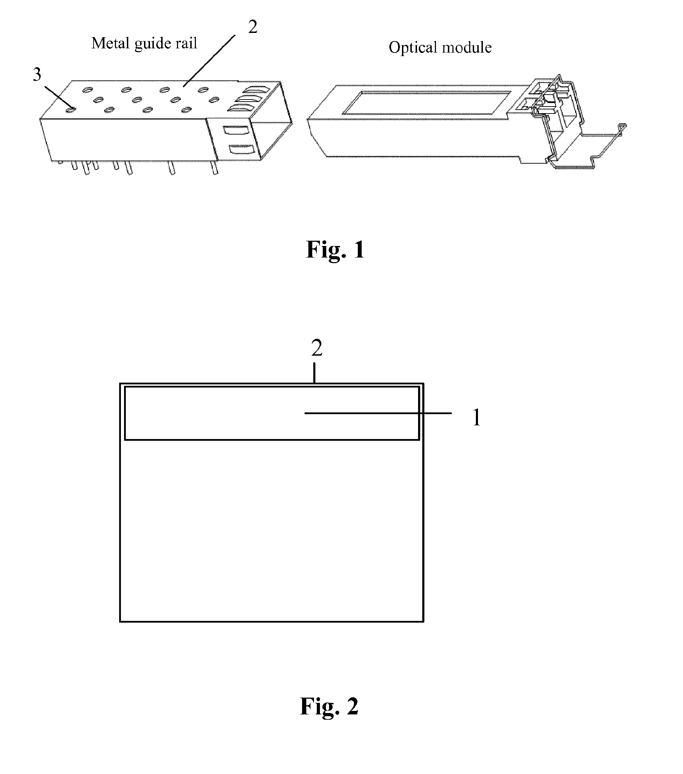

Fig. 1 shows the standard metal guide rail for the optical module and an assembly relationship. When being used, the optical module is required to be plugged into the metal shielding guide rail to connect with a circuit on a Printed Circuit Board (PCB), and is unplugged when being not used. During practical use, the optical module is also required to be plugged and unplugged for many times.

### Summary

The embodiments of the present invention provide a metal guide rail for an optical module, so as to at least solve the problem of heat dissipation bottleneck caused by the fact that an air gap exists between a metal guide rail and an optical module and the heat of the optical module is difficult to smoothly conduct to the metal guide rail.

According to one embodiment of the present invention, a metal guide rail for an optical module is provided, which includes: an elastic structural part, arranged on an inner wall of a heat absorption surface of a shell to contact with an optical module for heat conduction.

In an example embodiment, the elastic structural part includes: one or more first elastic structural parts, or a second elastic structural part consisting of an integrated plate.

In an example embodiment, each of the one or more first elastic structural parts structurally includes: one or more spring pieces, which are integrated or mutually connected with the inner wall of the heat absorption surface of the shell.

In an example embodiment, the spring pieces and/or the heat absorption surface of the shell are coated with a heat-conducting material.

In an example embodiment, an elasticity direction of each first elastic structural part is perpendicular to the inner wall of the heat absorption surface of the shell.

In an example embodiment, the first elastic structural parts are arranged on the inner wall of the heat absorption surface of the shell according to a preset rule.

In an example embodiment, one or more first elastic structural parts are arranged on the inner wall of the heat absorption surface of the shell.

In an example embodiment, the second elastic structural part structurally includes: the integrated plate, which is integrated or mutually connected with the inner wall of the heat absorption surface of the shell.

In an example embodiment, the heat absorption surface of the shell of the metal guide rail for the optical module is of an integrated plate structure without ventilation holes.

In an example embodiment, a material for the elastic structural part is a metal and/or a compressible heat-conducting material.

In an example embodiment, the metal guide rail for the optical module at least includes one of: a single-layer single-channel guide rail, a single-layer multi-channel guide rail, a multilayer single-channel guide rail and a multilayer multi-channel guide rail.

In an example embodiment, an assembly height of the metal guide rail is subjected to tolerance constraining.

According to the embodiments of the present invention, the elastic structural part is additionally arranged, and the metal guide rail for the optical module contacts with the optical module through the elastic structural part, so that the heat of the optical module can be conducted through the elastic structural part. The problem of heat dissipation bottleneck caused by the fact that the air gap exists between the metal guide rail and the optical module and the heat of the optical module is difficult to smoothly conduct to the metal guide rail is solved, conduction heat resistance between a guide rail shell and the optical module is further lowered, a heat dissipation capability of the metal guide rail is improved, and a better heat dissipation condition is created for the optical module.

### Brief Description of the Drawings

The drawings are described here to provide further understanding of the present invention, and form a part of the present invention. The schematic embodiments and description of the present invention are adopted to explain the present invention, and do not form improper limits to the present invention. In the drawings:
Fig. 1 is diagram of a metal guide rail for an optical module and an assembly relationship according to a related art;
Fig. 2 is a first structure diagram of a metal guide rail for an optical module according to an embodiment of the present invention;
Fig. 3 is a second structure diagram of a metal guide rail for an optical module according to an embodiment of the present invention;
Fig. 4 is a second structure section of a metal guide rail for an optical module according to an embodiment of the present invention;
Fig. 5 is a third structure diagram of a metal guide rail for an optical module according to an embodiment of the present invention;
Fig. 6 is a third structure section of a metal guide rail for an optical module according to an embodiment of the present invention;
Fig. 7 is a diagram of an assembly height of a metal guide rail for an optical module according to an example embodiment of the present invention;
Fig. 8 is a diagram of a multilayer guide rail of a metal guide rail for an optical module according to an example embodiment of the present invention; and
Fig. 9 is an assembly diagram of a metal guide rail for an optical module according to an example embodiment of the present invention.

### Detailed Description of the Embodiments

The present invention is described below with reference to the drawings and embodiments in detail. It should be noted that the embodiments of the present invention and the characteristics in the embodiments can be combined under the condition of no conflicts.

Considering the problem of heat dissipation bottleneck caused by the fact that an air gap exists between a metal guide rail and an optical module and the heat of the optical module is difficult to smoothly conduct to the metal guide rail in a related art, an embodiment of the present invention provides a metal guide rail for an optical module, which, as shown in Fig. 2, structurally includes: an elastic structural part 1, arranged on an inner wall of a heat absorption surface 2 of a shell to contact with the optical module for heat conduction.

According to the embodiment of the present invention, the elastic structural part 1 is additionally arranged, and the metal guide rail for the optical module contacts with the optical module through the elastic structural part, so that the heat of the optical module can be conducted through the elastic structural part 1. The problem of heat dissipation bottleneck caused by the fact that the air gap exists between the metal guide rail and the optical module and the heat of the optical module is difficult to smoothly conduct to the metal guide rail is solved, conduction heat resistance between a guide rail shell and the optical module is further lowered, a heat dissipation capability of the metal guide rail is improved, and a better heat dissipation condition is created for the optical module.

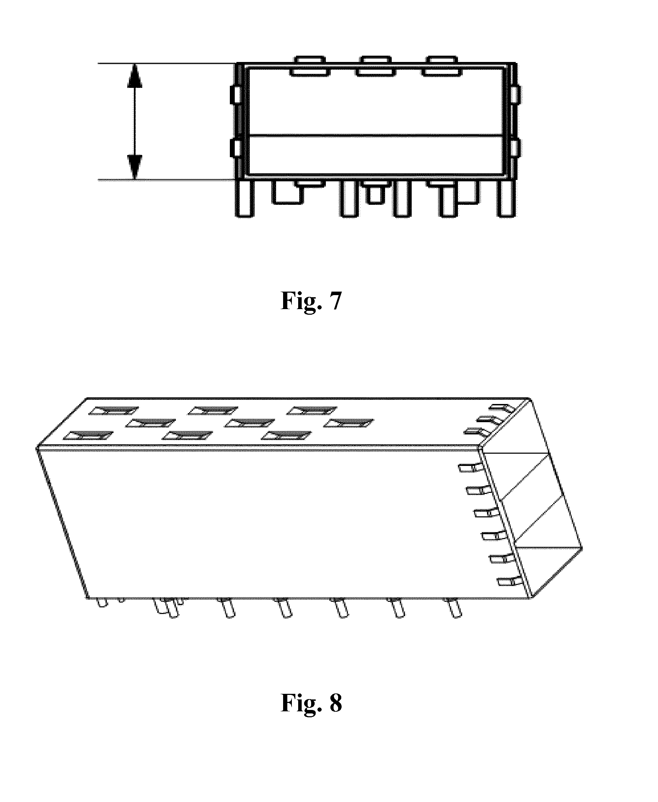

In an implementation process, an assembly height of the metal guide rail may be subjected to tolerance constraining (as shown in Fig. 7), so that a product can be developed more conveniently and flexibly.

In the implementation process, the elastic structural part 1 may have diversified forms, and may include one or more first elastic structural parts 11, or a second elastic structural part 12 consisting of an integrated plate.

If the elastic structural part 1 includes one or more first elastic structural parts 11, the first elastic structural parts 11 may have a variety of structures, for example, each first elastic structural part 11 may include one or more spring pieces, which form an integrated design with the inner wall of the heat absorption surface 2 of the shell or are connected with the heat absorption surface 2 of the shell. In a specific implementation process, each first elastic structural part 11 adopting such an arrangement mode may include two spring pieces or four or more spring pieces. The heat absorption surface 2 of the shell of the metal guide rail may have hollows which are positions where the first elastic structural parts 11 are arranged. Of course, the heat absorption surface of the shell of an integrated plate structure without ventilation holes may also be adopted for the above arrangement.

In order to further improve heat conductivity, the spring pieces and the heat absorption surface 2 of the shell may also be coated with a heat-conducting material, so that a heat conduction effect can further be enhanced, and the metal guide rail may be endowed with higher heat dissipation performance.

In an example implementation process, an elasticity direction of the one or more first elastic structural parts 11 is perpendicular to the inner wall of the heat absorption surface 2 of the shell. The adoption of such a perpendicular arrangement mode is more favourable for pressing the optical module.

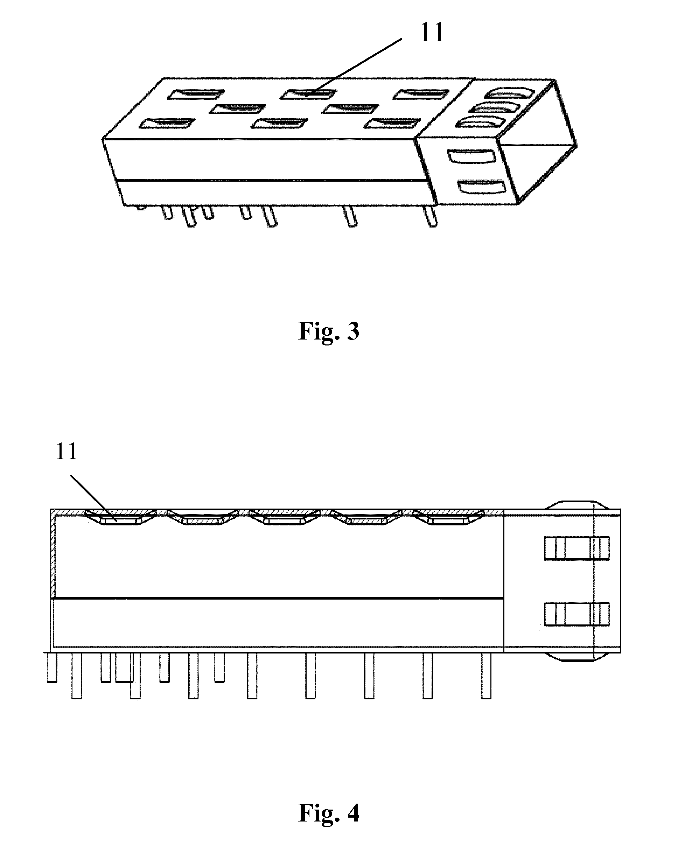

As an example implementation mode, the one or more first elastic structural parts 11 may be arranged on the inner wall of the heat absorption surface 2 of the shell according to a preset rule, wherein the preset rule may refer to the transversely staggered arrangement of the first elastic structural parts 11, as shown in Fig. 3, and a section of the metal guide rail for the optical module is as shown in Fig. 4. Of course, the one or more first elastic structural parts 11 may be designed according to design needs and different rules. During implementation, one or more first elastic structural parts 11 are arranged on the inner wall of the heat absorption surface 2 of the shell.

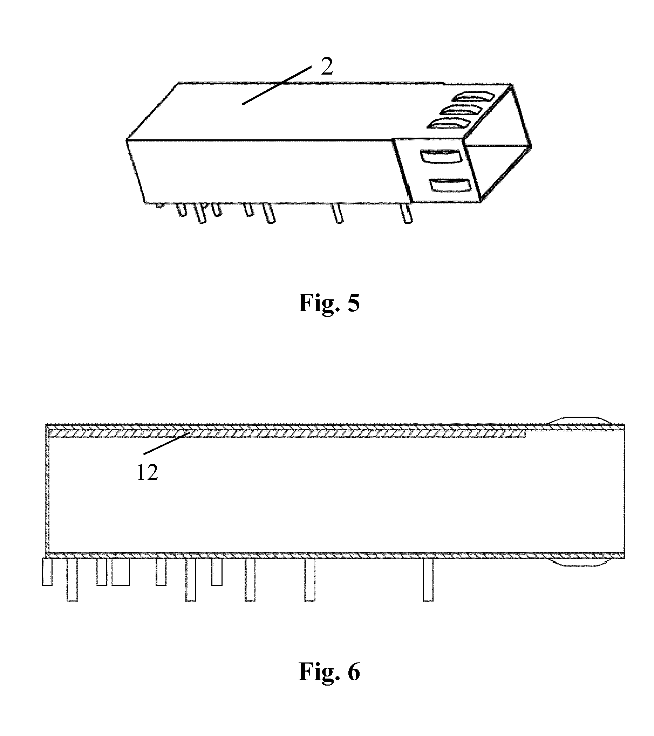

If the elastic structural part 1 includes the second elastic structural part 12 consisting of the integrated plate, as shown in Fig. 5, the second elastic structural part 12 structurally includes: the integrated plate, which is integrated or mutually connected with the inner wall of the heat absorption surface 2 of the shell. During implementation, the second elastic structural part 12 may be designed into a whole when being designed, and of course, the integrated plate may be selectively added to the heat absorption surface 2 of the shell of the formed metal guide rail. In order to give a clear description, the section of the metal guide rail is as shown in Fig. 6. What should be noted that the second elastic structural part 12 may also be arranged in another way, for example, the second elastic structural part 12 includes one or more springs, which are connected with the inner wall of the heat absorption surface 2 of the shell; and the integrated plate, which is connected with the one or more springs and parallel to the optical module. In the example embodiment, the integrated plate may be made from a metal or a compressible heat-conducting material. If the integrated plate is made from the metal, a layer of heat-conducting material may also be additionally arranged on an outer layer of the metal, or the metal can be combined with the compressible heat-conducting material, the combined integrated plate has elasticity, thus meeting a requirement of the elastic structural part 1.

In the specific implementation process, the heat absorption surface 2 of the shell of the metal guide rail for the optical module is of the integrated plate structure without the ventilation holes 3, as shown in Fig. 5. The heat absorption surface 2 of the shell is arranged to be the integrated plate without the ventilation holes 3, so that the problems of pollution to a surface of the optical module and reduction in heat dissipation reliability, which are caused when a heat-conducting gasket is arranged below the guide rail for heat dissipation, are radically solved.

The metal guide rail for the optical module provided by the embodiments can be used for various places, for example, a single-layer single-channel guide rail, a single-layer multi-channel guide rail, a multilayer single-channel guide rail and a multilayer multi-channel guide rail.

### Example embodiment

The example embodiment provides a metal guide rail special for an application scenario where a heat-conducting gasket is arranged below the guide rail for the enhanced heat dissipation of an optical module. The metal guide rail has the following main characteristics.

The formation of ventilation holes in the heat absorption surface of the shell of the metal guide rail can be avoided, as shown in Fig. 5. Elastic structural parts 11 of which elasticity directions are substantially perpendicular to the heat absorption surface are regularly distributed on the heat absorption surface of the shell of the metal guide rail, as shown in Fig. 4. An assembly height dimension of the metal guide rail has a tolerance constraint, as shown in Fig. 7. In addition, other requirements of the metal guide rail in the example embodiment are completely consistent with those of a standard MSA protocol-based guide rail, and the metal guide rail is high in universality.

The elastic structural parts 11 in the example embodiment may of spring piece structures, compressible metal structures, or compressible heat-conducting material structures. The elastic structural parts 11 may also be coated with a heat-conducting material.

A structural form of the metal guide rail for the optical module in the example embodiment is not limited to a single-layer single-channel guide rail, and also includes a multilayer multi-channel metal guide rail for the optical module, as shown in Fig. 8.

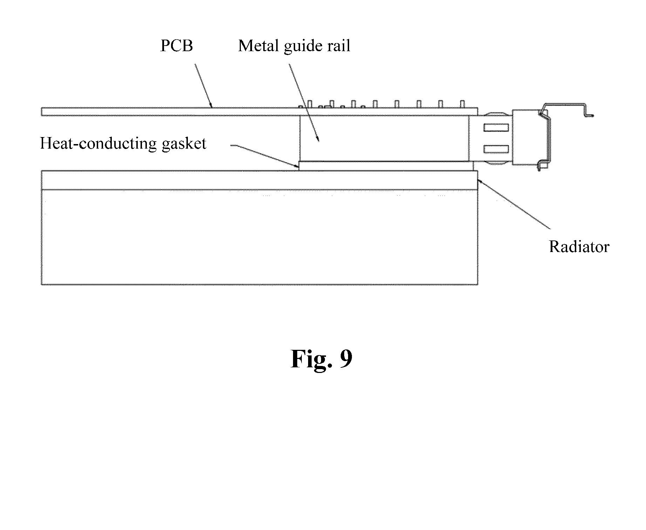

Fig. 9 shows an assembly relationship between the metal guide rail and an optical module. When the metal guide rail is used, PCB design and surface mounting machining may be adopted like those for a conventional MSA standard-based metal guide rail. A heat-conducting gasket is assembled between a radiator and the guide rail, and the assembly of the whole metal guide rail is finished on a production line. The optical module is plugged into the guide rail, and can be plugged and unplugged for many times according to actual needs.

Compared with the conventional standard-based metal guide rail for the optical module, the metal guide rail for the optical module in the example embodiments has a plurality of beneficial effects. For example, the conduction heat resistance between a guide rail shell and the optical module is lowered by the metal guide rail in the example embodiments, and the heat dissipation capability of the optical module is improved; the problems of pollution to the surface of the optical module and reduction in heat dissipation reliability, which are caused when the heat-conducting gasket is arranged below the guide rail for heat dissipation, are solved; the assembly height dimension of the guide rail is limited, so that a dimensional difference between materials of different manufacturers is avoided, and the development of the product is facilitated; and the metal guide rail for the optical module in the example embodiments is simple in structure, and its use and maintenance are completely consistent with those of the standard guide rail.

From the above, it can be seen that the embodiments of the present invention have the following technical effects that:
the elastic structural part is additionally arranged, and the metal guide rail for the optical module contacts with the optical module through the elastic structural part, so that the heat of the optical module can be conducted through the elastic structural part, the problem of heat dissipation bottleneck caused by the fact that the air gap exists between the metal guide rail and the optical module and the heat of the optical module is difficult to smoothly conduct to the metal guide rail is solved, conduction heat resistance between the guide rail shell and the optical module is further lowered, the heat dissipation capability of the metal guide rail is improved, and better heat dissipation condition is created for the optical module.

The above is only the example embodiment of the present invention and not intended to limit the scope of protection of the present invention, and for those skilled in the art, the present invention can have various modifications and variations. Any modifications, equivalent replacements, improvements and the like within the principle of the present invention shall fall within the scope of protection as defined by the appended claims of the present invention.

## Claims

1. A metal guide rail for an optical module, **characterized in that** the metal guide rail comprises:
an elastic structural part (1), arranged on an inner wall of a heat absorption surface (2) of a shell to contact with an optical module for heat conduction.

2. The metal guide rail for the optical module according to claim 1, **characterized in that** the elastic structural part (1) comprises: one or more first elastic structural parts (11), or a second elastic structural part (12) consisting of an integrated plate.

3. The metal guide rail for the optical module according to claim 2, **characterized in that** each of the one or more first elastic structural parts (11) structurally comprises:
one or more spring pieces, which are integrated or mutually connected with the inner wall of the heat absorption surface (2) of the shell.

4. The metal guide rail for the optical module according to claim 3, **characterized in that** the spring pieces and/or the heat absorption surface (2) of the shell are coated with a heat-conducting material.

5. The metal guide rail for the optical module according to any one of claims 2 to 4, **characterized in that** an elasticity direction of the one or more first elastic structural parts (11) is perpendicular to the inner wall of the heat absorption surface (2) of the shell.

6. The metal guide rail for the optical module according to any one of claims 2 to 4, **characterized in that** the one or more first elastic structural parts (11) are arranged on the inner wall of the heat absorption surface (2) of the shell according to a preset rule.

7. The metal guide rail for the optical module according to any one of claims 2-4, **characterized in that** the one or more first elastic structural parts (11) are arranged on the inner wall of the heat absorption surface (2) of the shell.

8. The metal guide rail for the optical module according to claim 2, **characterized in that** the second elastic structural part (12) structurally comprises:
the integrated plate, which is integrated or mutually connected with the inner wall of the heat absorption surface (2) of the shell.

9. The metal guide rail for the optical module according to claim 8, **characterized in that** the heat absorption surface (2) of the shell of the metal guide rail for the optical module is of an integrated plate structure without ventilation holes (3).

10. The metal guide rail for the optical module according to any one of claims 1 to 9, **characterized in that** a material for the elastic structural part (1) is a metal and/or a compressible heat-conducting material.

11. The metal guide rail for the optical module according to any one of claims 1 to 9, **characterized in that** the metal guide rail for the optical module at least comprises one of:
a single-layer single-channel guide rail, a single-layer multi-channel guide rail, a multilayer single-channel guide rail and a multilayer multi-channel guide rail.

12. The metal guide rail for the optical module according to any one of claims 1 to 9, **characterized in that** an assembly height of the metal guide rail is subjected to tolerance constraining.
